# EUROPEAN PATENT APPLICATION

(11) **EP 2 489 789 A2**
(43) Date of publication of application: **22.08.2012**
(21) Application number: 12156014.8
(22) Date of filing: 17.02.2012
(51) Int. Cl.: E03B 5/02

(54) **Secondary pressurization water supply equipment**

(30) Priority: 17.02.2011 CN 201120040866 U
(71) Applicant: Grundfos Management A/S, 8850 Bjerringbro (DK); Grundfos Pump (Suzhou) Co., Ltd, Suzhou, Jiangsu 215126 (CN)
(72) Inventor: Lin, Huanxi, 215126 Suzhou, Jiangsu (CN)
(74) Representative: Patentanwälte Vollmann & Hemmer

(57) **Abstract**

The invention discloses a secondary pressurization water supply equipment comprising a base (10), at least two horizontal water pumps (11) mounted on the base (10), a water inlet pipeline, a water outlet pipeline and a controller. The water inlet pipeline includes at least two water inlet components and a water inlet manifold (12), one end of each of the at least two water inlet components is communicating with the water inlet of each of the at least two horizontal water pumps (11), and the other end thereof is communicating with the water inlet manifold (12). The water outlet pipeline includes at least two water outlet components and a water outlet manifold (13), and one end of each of the at least two water outlet components is communicating with the water outlet (112) of each of the at least two horizontal water pumps (11), and the other end thereof is communicating with the water outlet manifold (13). Both the water inlet components and the water outlet components are disposed vertically, and both the water inlet manifold (12) and the water outlet manifold (13) are disposed horizontally. Both ends of each of the water inlet manifold (12) and the water outlet manifold (13) are provided with connecting structures, respectively. The layout of the equipment of the invention is proper, so its structure is compact, the volume is small, and the occupied space is effectively reduced.

## Description

The invention relates to a secondary pressurization water supply equipment for secondary pressurization connected between a terminal of a municipal water pipe network or a water tank at a top of a building and a user terminal.

Secondary pressurization water supply equipments disposed at terminals of water pipe networks are classified into two types, i.e., vertical equipments and horizontal equipments. The horizontal secondary pressurization water supply equipment includes a base, at least two horizontal water pumps fixed on the base, a controller for controlling operation of the horizontal secondary pressurization water supply equipment and so on. The controller is mounted inside a control cabinet and fixed on the base via a controller bracket. A water inlet pipeline and a water outlet pipeline are disposed between the horizontal water pump and the municipal water pipe network and between the horizontal water pump and a user terminal, respectively.

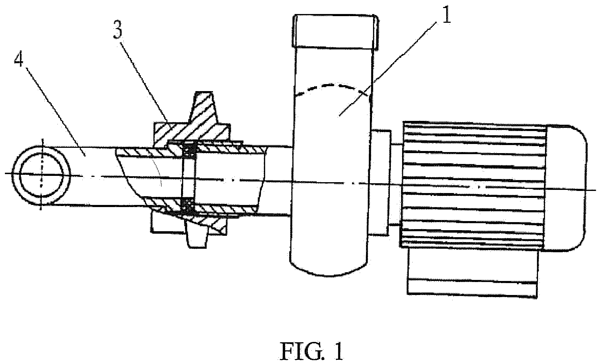

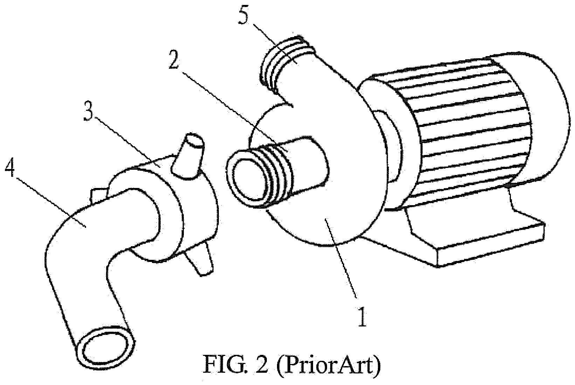

In the conventional secondary pressurization water supply equipment at the terminal of the water pipe network, the connections of the horizontal water pump to the water inlet and outlet pipelines are shown in FIGS. 1 and 2. A water inlet 2 of the pump 1 is connected to a bent pipe 4 via a nut 3, and the bent pipe 4 is connected to the municipal water pipe network. A water outlet 5 of the pump 1 is directly connected to a water inlet pipe of the user terminal. Since The water outlet 5 of the pump 1 is in a positive direction of Y axis, and the water inlet 2 is in a negative direction of X axis, while the part of the bent pipe 4 connecting to the municipal water pipe network is in the negative direction of Y axis, thus the whole structure of the secondary pressurization water supply equipment is incompact, and the equipment has a big volume requiring to occupy a larger space. If a plurality of pumps are used at the same time, the defects of improper layout and large volume are more prominent.

The object of present invention is to overcome the drawbacks of having an incompact whole structure and larger volume in the conventional secondary pressurization water supply equipment.

The invention provides the following solutions for achieving the object: A secondary pressurization water supply equipment of the invention comprises a base, at least two horizontal water pumps mounted on the base, a water inlet pipeline, a water outlet pipeline and preferably but not necessarily a controller for controlling operation of the secondary pressurization water supply equipment. Each of the horizontal water pump has a water inlet and a water outlet. The water inlet pipeline includes at least two water inlet components and a water inlet manifold, one end of each of the at least two water inlet components is communicating with the water inlet of each of the at least two horizontal water pumps, and the other end of the at least two water inlet components is communicating with the water inlet manifold. The water outlet pipeline includes at least two water outlet components and a water outlet manifold, one end of each of the at least two water outlet components is communicating with the water outlet of each of the at least two horizontal water pumps, and the other end of each of the at least two water outlet components is communicating with the water outlet manifold. Both the water inlet and outlet components are disposed vertically, and both the water inlet and outlet manifolds are disposed horizontally. Both ends of each of the water inlet and outlet manifolds are provided with connecting structures, respectively.

The water inlet component comprises a bent pipe which has a bottom end connected to the water inlet of the horizontal water pump, a flexible joint which is connected to a top end of the bent pipe and a water inlet valve which is connected to the flexible joint.

The water outlet component comprises a one-way valve which is connected to the water outlet of the horizontal water pump via a connecting flange and a water outlet valve which is connected to the one-way valve via the connecting flange.

The connecting flange may be a round flange or an elliptical flange.

The connecting structures at both ends of each of the water and outlet manifolds may be flanges or threaded parts.

The secondary pressurization water supply equipment may further comprises a plurality of supporting bars. Each of the supporting bars has a bottom end connected to the base, and a top connected to the water inlet manifold or the water outlet manifold.

The controller is mounted inside a control cabinet, and the control cabinet is fixed on the base via a bracket and located between the two adjacent horizontal water pumps.

A bracket seat is fixed on the base, and the bracket seat comprises a baseboard which is fixed on the base and a channel-section support which is fixed to the baseboard, and a bottom of the bracket is fixed in the channel-section support.

The distance between two center lines of the two adjacent horizontal water pumps on the base may be 350-450mm.

The distance between an outer lateral of the outmost horizontal water pump located outside of the base and an edge of the base may be 15-50mm.

An end of the water inlet manifold protrudes from the center line of the water inlet component which is connected to the end of the water inlet manifold, and a length of protrusion is larger than a length of a handle of the water inlet valve. An end of the water outlet manifold protrudes from the center line of the water outlet component which is connected to the end of the water outlet manifold, and a length of protrusion is larger than a length of a handle of the water outlet valve.

It would be apparent from the above solutions, the secondary pressurization water supply equipment of the invention has the advantages and beneficial effects hereinbelow: according to the invention, both the water inlet component in the water inlet pipeline and the water outlet component in the water outlet pipeline are disposed vertically, and both the water inlet manifold in the water inlet pipeline and the water outlet manifold in the water outlet pipeline are disposed horizontally, therefore such layout is proper. As a result, the structure is compact, the volume is small, and the occupied space is effectively reduced.

Hereinafter, the embodiments of the present invention will be described in detail with reference to the accompanying drawings, in which:
- FIG. 1: is a front view of conventional secondary pressurization water supply equipment;
- FIG.2: is a perspective view of the conventional secondary pres- surization water supply equipment shown in FIG. 1;

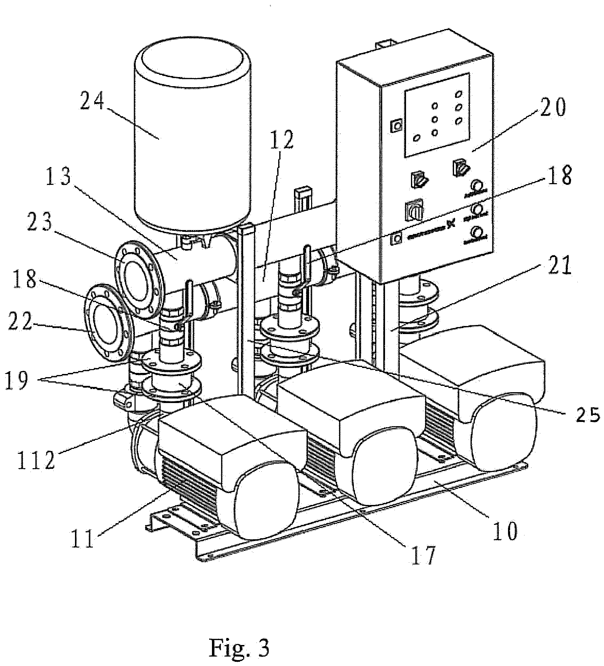

- FIG. 3: is a perspective view of the secondary pressurization water supply equipment mounted with three horizontal water pumps according to the first embodiment of the invention seen from the front;

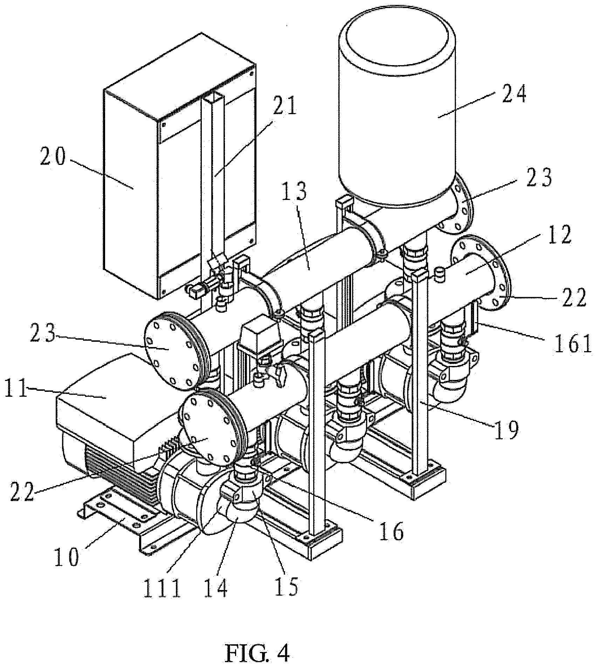

- FIG. 4: is a perspective view of the secondary pressurization water supply equipment mounted with three horizontal water pumps according to the first embodiment of the invention seen from the back;

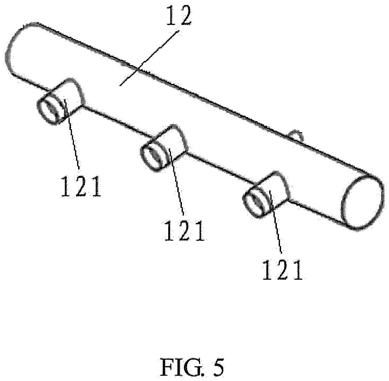

- FIG. 5: is a perspective view of the water inlet manifold in the secondary pressurization water supply equipment according to the first embodiment of the invention;

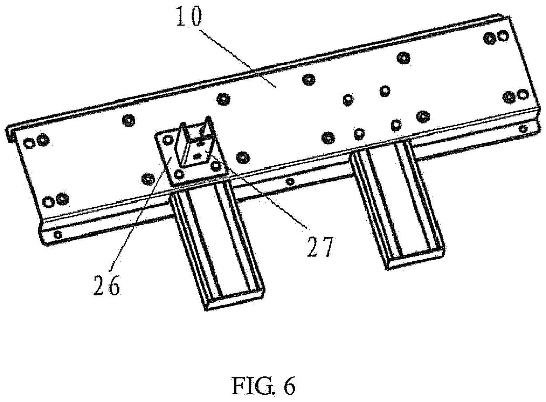

- FIG. 6: is a perspective view of the bracket fixed seat of the secondary pressurization water supply equipment according to the first embodiment of the invention; and
- FIG. 7: is a perspective view of the secondary pressurization water supply equipment mounted with two horizontal water pumps according to the second embodiment of the invention seen from the back.

The embodiments of the invention will be described in detail hereinafter. However, the embodiments are just examples, rather than intended to limit the scope of the invention.

As shown in FIG.S 3 to 6, the secondary pressurization water supply equipment according to the first embodiment of the invention includes a base 10, three horizontal water pumps 11 mounted on the base 10 and a controller for controlling operation of the secondary pressurization water supply equipment. Each horizontal water pump 11 has a water inlet 111 and a water outlet 112. A water inlet pipeline is connected between the horizontal water pump 11 and a terminal of a municipal water pipe network or a water storage tank at a top of a building, and a water outlet pipeline is connected between the horizontal water pump 11 and a user terminal. Thus, water from the municipal water pipe network or the water storage tank at the top of the building can be supplied to the user after secondary pressurization of the horizontal water pump 11.

The water inlet pipeline includes three water inlet components and a water inlet manifold 12. One end of each water inlet component is communicating with a water inlet 111 of each of the three horizontal water pumps 11, and the water inlet manifold 12 is communicating with the other end of each of the water inlet components. The water inlet manifold 12 includes a straight pipe, a connecting pipe 121 integrated with the straight pipe and used for connecting the water inlet components, and an assembling portion for mounting a pressure switch. Each end of the water inlet manifold 12 is provided with a flange 22 for connecting to a pipe of the municipal water pipe network or a pipe of the water storage tank at the top of the building. The water inlet component includes a bent pipe 14 which has a bottom end connected to the water inlet 111 of the horizontal water pump 11, a flexible joint 15 which is connected to a top end of the bent pipe 14, and a water inlet valve 16 such as a ball valve and the like which is connected to the flexible joint 15. The bent pipe 14, which has a bottom end connected to the water inlet 111 of the horizontal water pump 11, has a top end bending upright, thus other water inlet components connected to the bent pipe 14 are disposed vertically also. The flexible joint 15 is a standard part commercially available, which is composed of two hoop bodies and a seal ring and is designed for large-diameter pressure pipe system to provide stable connection. A special wedge key of the flexible joint increases an allowed liner elongation of the pipe ends, so as to facilitate initial assembly aligning. The flexible joint 15 allows a certain liner movement and a certain angle declination movement at the pipe connection, namely allows a certain assembly tolerance for the pipe system to expand on heating and contract on cooling, absorb vibration, and earthquake, and be suitable for other occasions that require flexibility. The flexible joint 15 has a good inner tightness. So the invention, by introduction of the flexible joint 15, can not only ensure the tightness connection of the water inlet component reliable, but also facilitate its assembling and disassembling. The end of the water inlet manifold 12 protrudes from a center line of the water inlet component which is connected to this end of the water inlet manifold 12, and the length of protrusion is larger than the length of a handle 161 of the water inlet valve 16 of the water inlet component, thereby preventing the handle 161 from interfering with the flange 22 at the end of the water inlet manifold 12 when the water inlet valve 16 is opened or shut.

The water outlet pipeline includes three water outlet components and a water outlet manifold 13. One end of each of the water outlet components is communicating with a water outlet 112 of each of the three horizontal water pumps 11, and the water outlet manifold 13 is communicating with the other end of each of the three water outlet components. The structure of the water outlet manifold 13 is the same as that of the water inlet manifold 12, which is also provided with a pressure switch, a pressure sensor, a diaphragm tank 24 and so on. Each end of the water outlet manifold 13 is provided with a flange 23 for connecting the user terminal. The water outlet component includes a one-way valve 17 which is connected to the water outlet 112 of the horizontal water pump 11 via a round flange 19, and a water outlet valve 18 such as a ball valve and so on which is connected to a top of the one-way valve 17 via the round flange 19. The end of the water outlet manifold 13 protrudes from the center line of the water outlet component which is connected to this end of the water outlet manifold 13, and the length of protrusion is larger than a length of a handle 181 of the water outlet valve 18, thereby preventing the handle 181 from interfering with the flanges 23 at the end of the water outlet manifold 13 when the water outlet valve 18 is opened or shut.

The direction of the water outlet 112 of the horizontal water pump 11 is upright, therefore according to the invention, both the water inlet and outlet components are disposed vertically, and both the water inlet manifold 12 and the water outlet manifold 13 are disposed horizontally. Such a layout can effectively reduce the volume of the secondary pressurization water supply equipment.

The secondary pressurization water supply equipment of the invention further includes a plurality of supporting bars 25. Each supporting bar 25 has a bottom end connected to the base 10, and a top end connected to the water inlet manifold 12 or the water outlet manifold 13 to help supporting the water inlet manifold 12 or the water outlet manifold 13. However, the supporting bar 25 is not necessary if the strength of the water inlet component and the water outlet component is enough.

The controller is usually disposed inside a control cabinet 20, and the control cabinet 20 is fixed on the base 10 via a bracket 21. A bracket seat is fixed on the base 10 and comprises a baseboard 26 which is fixed on the base 10 and a channel-section support 27 which is fixed on the baseboard 26. The channel-section support 27 may be made of channel steel. A bottom of the bracket 21 is fixed in the channel-section support 27 by bolt. According to the invention, the bracket seat is disposed between the two adjacent horizontal water pumps 11 to make the control cabinet 20 at the top of the bracket 21 be located above the base 10, thereby advantageously reducing the size of the base 10, and further reducing the whole volume of the secondary pressurization water supply equipment. In another aspect, when the bracket 21 is disposed between the two horizontal water pumps 11, if the base 10 has generally the same size as the conventional base, the distance between two center lines of the two adjacent horizontal water pumps 11 may be 400mm. Of course, the distance between two center lines of the two adjacent horizontal water pumps 11 is not limited to be exactly this value of 400mm, rather, it may vary from 350mm to 450mm in a lager range according to practical requirements. Meanwhile, the distance from an outer lateral of the outmost horizontal water pump 11 located outside of the base 10 to an edge of the base 10 may be 18mm, of course, this distance may also feasibly be in a range of 15mm to 50mm. Usually for different secondary pressurization water supply equipments, or rather, for the equipments comprises two, three or four horizontal water pumps, the size of the base is relative fixed. When the equipment includes less pumps, the distance from the outer lateral of the outmost horizontal water pump 11 located outside of the base 10 to the edge of the base 10 may be 50mm. When the equipment includes more horizontal water pumps, the distance from the outer lateral of the outmost horizontal water pump 11 located outside of the base 10 to the edge of the base 10 may be 15mm. Therefore, according to the invention, a plurality of horizontal water pumps 11 can be arranged on the base 10 more properly, and the force on the base is distributed more uniform.

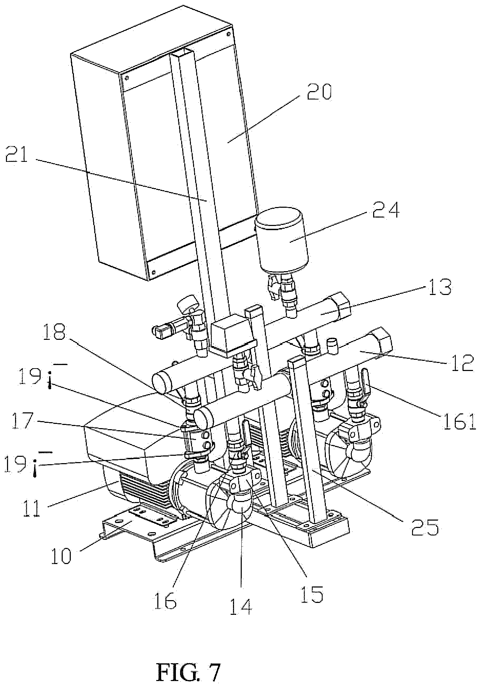

As shown in FIG. 7, the secondary pressurization water supply equipment according to the second embodiment of the invention has a structure generally same as that of the first embodiment, the difference of the second embodiment is only that, the equipment of the second embodiment includes two horizontal water pumps 11, and an elliptical flange 19' in stead of the round flange 19. As a result, the detachment is more convenient. Other same parts are not illustrated herein again. Although the invention has been described as above in reference to several typical embodiments, it is to be understood that the terms used therein are just illustrative and exemplary rather than restrictive. Since the invention can be applied in various forms without departing from the spirit or principle of the invention, it is to be understood that the abovementioned embodiments will not be limited to any specific details mentioned above, rather, they should be construed broadly in the spirit or concept of the invention defined by the appended claims. Therefore, the present invention aims to cover all the modifications or variations falling within the protection scope defined by the appended claims.

## Claims

1. A secondary pressurization water supply equipment comprising a base (10), at least two horizontal water pumps (11) mounted on the base (10), a water inlet pipeline, a water outlet pipeline wherein each of the horizontal water pumps (11) has a water inlet (111) and a water outlet (112), **characterized in that** the water inlet pipeline includes at least two water inlet components and a water inlet manifold (12), one end of each of the at least two water inlet components is communicating with the water inlet (111) of each of the at least two horizontal water pumps (11), and the other end of each of the at least two water inlet components is communicating with the water inlet manifold (12); wherein the water outlet pipeline includes at least two water outlet components and a water outlet manifold (13), one end of each of the at least two water outlet components is communicating with the water outlet (112) of each of the at least two horizontal water pumps (11), and the other end of each of the at least two water outlet components is communicating with the water outlet manifold (13); wherein both the water inlet component and the water outlet component are disposed vertically, both the water inlet manifold (12) and the water outlet manifold (13) are disposed horizontally, and both ends of each of the water inlet manifold (12) and the water outlet manifold (13) are provided with connecting structures, respectively.

2. The secondary pressurization water supply equipment according to claim 1, **characterized in that** the water inlet component comprises a bent pipe (14) which has a bottom end connected to the water inlet (111) of the horizontal water pump (11), a flexible joint (15) which is connected to a top end of the bent pipe (14) and a water inlet valve (16) which is connected to the flexible joint (15).

3. The secondary pressurization water supply equipment according to claim 1, **characterized in that** the water outlet component comprises a one-way valve (17) which is connected to the water outlet (112) of the horizontal water pump (11) via a connecting flange and a water outlet valve (18) which is connected to the one-way valve (17) via the connecting flange.

4. The secondary pressurization water supply equipment according to claim 3, **characterized in that** the connecting flange is a round flange (19) or an elliptical flange (19').

5. The secondary pressurization water supply equipment according to claim 1, **characterized in that** the connecting structures at both ends of each of the water inlet manifold (12) and the water outlet manifold (13) are flanges or threaded parts.

6. The secondary pressurization water supply equipment according to claim 1, **characterized in that** the secondary pressurization water supply equipment further comprises a plurality of supporting bars (25), each of the supporting bars (25) has a bottom end connected to the base (10) and a top end connected to the water inlet manifold (12) or the water outlet manifold (13).

7. The secondary pressurization water supply equipment according to any of claim 1 to 6, **characterized in that** there is a controller for controlling operation of the secondary pressurization water supply equipment which is mounted inside a control cabinet (20), and the control cabinet (20) is fixed on the base (10) via a bracket (21) and located between the two adjacent horizontal water pumps (11).

8. The secondary pressurization water supply equipment according to claim 7, **characterized in that** a bracket seat is fixed on the base (10) and comprises a baseboard (26) which is fixed on the base (10) and a channel-section support (27) which is fixed to the baseboard (26), and a bottom of the bracket (21) is fixed in the channel-section support (27).

9. The secondary pressurization water supply equipment according to claim 7, **characterized in that** the distance between the center lines of the two adjacent horizontal water pumps (11) on the base (10) is 350-450mm.

10. The secondary pressurization water supply equipment according to claim 9, **characterized in that** the distance from an outer lateral of the outmost horizontal water pump (11) located outside of the base (10) to an edge of the base (10) is 15-50mm.

11. The secondary pressurization water supply equipment according to claim 2 or 3, **characterized in that** an end of the water inlet manifold (12) protrudes from the center line of the water inlet component which is connected to the end of the water inlet manifold (12), with a length of protrusion larger than a length of a handle (161) of the water inlet valve (16); wherein an end of the water outlet manifold (13) protrudes from the center line of the water outlet component which is connected to the end of the water outlet manifold (13), with a length of protrusion larger than a length of a handle (181) of the water outlet valve (18).
